# EUROPÄISCHE PATENTANMELDUNG

(11) **EP 2 608 385 A1**
(43) Veröffentlichungstag der Anmeldung: **26.06.2013**
(21) Anmeldenummer: 11194189.4
(22) Anmeldetag: 19.12.2011
(51) Int. Cl.: H02M 7/483

(54) **Verfahren zum Steuern einer Stromrichterschaltung**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft ein Verfahren zum Steuern einer Stromrichterschaltung (4), die wenigstens zwei Submodule (22) in Reihenschaltung, die über eine Induktivität (20) elektrische Leistung aus einer eine Gleichspannung (16) abgebenden Leistungsquelle (8) bezieht aufweist, umfasst. Dabei weist jedes Submodul (22) eingangsseitig eine einphasige Halbbrücke (34) und lastseitig eine einphasige Vollbrücke (36) auf, wobei die Halbbrücke (34) und die Vollbrücke (36) gleichspannungsseitig sowie parallel hierzu ein Zwischenkreiskondensator (38) geschaltet sind. Ferner wird in jedem Submodul zur Abgabe einer elektrischen Leistung an einen elektrischen Verbraucher (6) eine am Zwischenkreiskondensator (38) abfallende Zwischenkreiskondensatorspannung (60) basierend auf einer Sollspannung wechselgerichtet. Erfindungsgemäß wird die Zwischenkreiskondensatorspannung (60) basierend auf der Sollspannung eingestellt.

## Beschreibung

Die Erfindung betrifft ein Verfahren gemäß dem Oberbegriff des Anspruchs 1, eine Steuervorrichtung zur Durchführung des Verfahrens und eine Stromrichterschaltung mit der Steuervorrichtung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in jedem Submodul eine am Zwischenkreiskondensator abfallende basierend auf einer am Ausgang des jeweiligen Submoduls abzugebenden Sollspannung einzustellen.

Der Erfindung geht von der Überlegung aus, dass in jedem Submodul die Kapazität der Zwischenkreiskondensatoren so klein wie möglich dimensioniert werden sollte, um Platz und Gewicht in den einzelnen Submodulen zu sparen. Durch die kleine Kapazität kann in den einzelnen Submodulen jedoch sehr wenig elektrische Energie zwischengespeichert werden, so dass eine in die Submodule eingespeiste Leistung umgehend am Ausgang der Submodule an die entsprechenden Lasten eines elektrischen Verbrauchers abgegeben werden muss. Daraus folgt, dass insbesondere im Nennpunkt der Stromrichterschaltung der Strom aus der elektrischen Leistungsquelle gleich dem Batteriestrom sein muss, da die einzelnen Submodule in Reihe geschaltet sind. Der Nennpunkt ist dabei ein Arbeitspunkt der Stromrichterschaltung, bei dem die Stromrichterschaltung im Dauerbetrieb ausfallsicher betrieben werden kann.

Der Erfindung liegt darauf basierend die Erkenntnis zugrunde, dass die an die elektrischen Lasten abgegebene elektrische Abgabeleistung somit nur über die Ausgangsspannung variiert werden kann. Dazu muss die Ausgangsspannung beispielsweise über eine Pulsweitenmodulation oder eine Raumzeigermodulation aus der Spannung am Zwischenkreiskondensator geformt werden. Damit die Ausgangsspannung aber nicht in die Aussteuergrenze gerät (das heißt, die Ausgangsspannung soll größer eingestellt werden als die Spannung am Zwischenkreiskondensator), sollte die Spannung am Zwischenkreiskondensator auf die Spitzenleistung ausgelegt werden, die an den angeschlossenen elektrischen Verbraucher abgegeben werden kann.

Der Erfindung liegt jedoch die Überlegung zugrunde, dass in der Regel nicht die Spitzenlast sondern die Nennlast von den an den Submodulen angeschlossenen elektrischen Lasten des elektrischen Verbrauchers abgerufen wird, wofür die auf Spitzenlasten ausgelegte Spannung am Zwischenkreiskondensator zu groß ist und bei der Modulation der Ausgangsspannung zu hohen Schaltverlusten führt.

Um diese Schaltverluste zu vermeiden, schlägt die Erfindung vor, die Spannung am Zwischenkreiskondensator an die Leistung anzupassen, die an den elektrischen Verbraucher abgegeben werden soll. Da die abzugebende elektrische Leistung anhand der Sollspannung eingestellt werden kann in einfacher Weise in jedem Submodul die am Zwischenkreiskondensator abfallende Spannung basierend auf der Sollspannung eingestellt werden.

Daher gibt die Erfindung ein Verfahren zum Steuern einer Stromrichterschaltung an, die wenigstens zwei Submodule in Reihenschaltung, die über eine Induktivität elektrische Leistung aus einer eine Gleichspannung abgebenden Leistungsquelle bezieht aufweist, umfasst. Dabei weist jedes Submodul eingangsseitig eine einphasige Halbbrücke und lastseitig eine einphasige Vollbrücke auf. Ferner sind die Halbbrücke und die Vollbrücke gleichspannungsseitig sowie parallel hierzu ein Zwischenkreiskondensator geschaltet. Zudem wird in jedem Submodul zur Abgabe einer elektrischen Leistung an einen elektrischen Verbraucher eine am Zwischenkreiskondensator abfallende Zwischenkreiskondensatorspannung basierend auf einer Sollspannung wechselgerichtet. Erfindungsgemäß wird die Zwischenkreiskondensatorspannung basierend auf der Sollspannung eingestellt.

Durch die Einstellung der Zwischenkreiskondensatorspannung basierend auf der Sollspannung können Schaltverluste in der Stromrichterschaltung der eingangs genannten Art minimiert und ihr Wirkungsgrad erhöht werden.

In einer Weiterbildung der Erfindung wird die Zwischenkreiskondensatorspannung einem Scheitelwert der Sollspannung folgend eingestellt. Dabei kann die Zwischenkreiskondensatorspannung dem Scheitelwert mit einem vorbestimmten Abstand folgen oder sie kann exakt den Scheitelwert annehmen. Der Scheitelwert der Sollspannung bestimmt gemeinsam mit der Zwischenkreiskondensatorspannung den Aussteuergrad. Je näher die Zwischenkreiskondensatorspannung am Aussteuergrad angenähert ist, desto kleiner sind die Schaltverluste in der Stromrichterschaltung.

In einer besonderen Weiterbildung der Erfindung wird die Zwischenkreiskondensatorspannung dem Scheitelwert der Sollspannung mit einer Aussteuerreserve folgend eingestellt. Die Aussteuerreserve heißt dabei, dass die Zwischenkreiskondensatorspannung um einen vorbestimmten Wert größer ist, als der Scheitelwert der Sollspannung. Dieser vorbestimmte Wert kann so bemessen sein, dass die Stromrichterschaltung zu jeder Zeit auf einen plötzlichen erhöhten elektrischen Leistungsbedarf des elektrischen Verbrauchers reagieren kann, ohne an die Aussteuergrenze zu geraten.

In einer bevorzugten Weiterbildung der Erfindung beträgt die Aussteuerreserve 5%-15%, was heißt, dass die Differenz zwischen dem Spitze-Spitze-Wert der Ausgangsspannung und der Zwischenkreiskondensatorspannung 5%-15% der Zwischenkreiskondensatorspannung beträgt. Besonders bevorzugt beträgt die Aussteuerreserve 10%.

In einer anderen Weiterbildung der Erfindung wird die Zwischenkreiskondensatorspannung basierend auf einer Kennlinie eingestellt wird. Diese Kennlinie ist wie bereits erwähnt von der Sollspannung abhängig. Da die Sollspannung die abzugebende Leistung der Stromrichterschaltung an den elektrischen Verbraucher und damit der einzelnen Submodule an die angeschlossenen elektrischen Lasten bestimmt, kann die Kennlinie in besonders geeigneter Weise über die von den Submodulen abzugebende und vom elektrischen Verbraucher aufgenommene elektrische Leistung aufgetragen sein.

In einer zusätzlichen Weiterbildung der Erfindung ist die Kennlinie in Abhängigkeit der an den elektrischen Verbraucher abzugebenden elektrischen Leistung monoton steigend. Damit wird durch die Kennlinie die Zwischenkreiskondensatorspannung erhöht, wenn die an den elektrischen Verbraucher abgegebene elektrische Leistung steigt, und umgekehrt.

Besonders günstig steigt die Kennlinie zumindest abschnittsweise linear mit der an die elektrischen Lasten abgegebenen elektrischen Leistung. Insbesondere steigt die Kennlinie zumindest abschnittsweise linear mit der an den elektrischen Lasten anliegenden Ausgangsspannung, weil linear mit der Ausgangsspannung mehr Zwischenkreisspannung benötigt wird.

In einer besonderen Weiterbildung der Erfindung ist der elektrische Verbraucher ein Elektromotor und die Kennlinie abhängig von der Drehzahl des Elektromotors.

In einer zusätzlichen Weiterbildung ist die Kennlinie unterhalb einer vorbestimmten Grenzdrehzahl eine Konstante, so dass eventuelle Grenzen bei der Einstellung der Zwischenkreiskondensatorspannung berücksichtigt werden können, wenn beispielsweise die Zwischenkreiskondensatorspannung nicht beliebig klein gewählt werden kann.

In einer bevorzugten Weiterbildung der Erfindung bilden die Induktivität und die Halbbrücke in jedem Submodul einen Hochsetzsteller, wobei in jedem Submodul das Einstellen der Zwischenkreiskondensatorspannung basierend auf der Sollspannung über den Hochsetzsteller erfolgt. Auf diese Weise kann die Zwischenkreiskondensatorspannung ohne zusätzliche technische Mittel eingestellt werden, da die Induktivität und die Halbbrücke in der eingangs genannten Stromrichterschaltung ohnehin vorhanden sind.

In einer besonders bevorzugten Weiterbildung bleibt die Kennlinie konstant, wenn die Sollspannung kleiner als eine Eingangsspannung des Hochsetzstellers ist.

Die Erfindung gibt auch eine Steuervorrichtung zur Durchführung eines angegebenen Verfahrens an.

In einer Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des angegebenen Verfahrens vorgesehen, wenn das Computerprogramm aus dem Speicher in den Prozessor geladen ist.

Die Erfindung gibt auch eine Stromrichterschaltung an, die wenigstens zwei Submodule in Reihenschaltung, die über eine Induktivität elektrische Leistung aus einer eine Gleichspannung abgebenden Leistungsquelle bezieht, umfasst. Dabei weist jedes Submodul eingangsseitig eine einphasige Halbbrücke und lastseitig eine einphasige Vollbrücke auf. Ferner sind die Halbbrücke und die Vollbrücke gleichspannungsseitig sowie parallel hierzu ein Zwischenkreiskondensator geschaltet. Die angegebene Stromrichterschaltung umfasst eine angegebene Steuervorrichtung.

Die Erfindung gibt auch einen Elektromotor an, der wenigstens einen ersten und zweiten Motorstrang zum Antreiben eines Rotors und eine angegebene Stromrichterschaltung umfasst. Dabei sind das erste Submodul mit dem ersten Motorstrang und das zweite Submodul mit dem zweiten Motorstrang verbunden.

In einer bevorzugten Weiterbildung der Erfindung weisen alle Motorstränge einen identischen Betriebspunkt auf.

In einer alternativen Weiterbildung der Erfindung weisen die Motorstränge verschiedene Betriebspunkte auf. Dieser Ausführung liegt die Überlegung zugrunde, dass die Summe aller Eingangsspannungen an den einzelnen Submodulen gleich der von der elektrischen Leistungsquelle abgegebenen Quellspannung sein muss. Diese Bedingung schränkt die Einstellung der Zwischenkreiskondensatorspannung mit dem Hochsetzsteller ein. Wenn die Betriebspunkte der einzelnen Submodule unterschiedlich gewählt werden, können die Zwischenkreiskondensatorspannungen einzelner Submodule weiter reduziert werden, wenn im Gegenzug dazu die Zwischenkreiskondensatorspannungen anderer Submodule erhöht werden.

Die Erfindung gibt auch ein Fahrzeug an, das ein Rad und einen angegebenen Elektromotor zum Antrieb des Rades umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einer beispielhaften Stromrichterschaltung,
- FIG 2: ein beispielhaftes Submodul der Stromrichterschaltung gemäß einem Ausführungsbeispiel,
- FIG 3: ein Diagramm einer Wechselspannung aus FIG 2,
- FIG 4: ein Ausschnitt aus der Wechselspannung aus FIG 3, und
- FIG 5: eine beispielhafte Kennlinie zur Einstellung der Zwischenkreiskondensatorspannung.

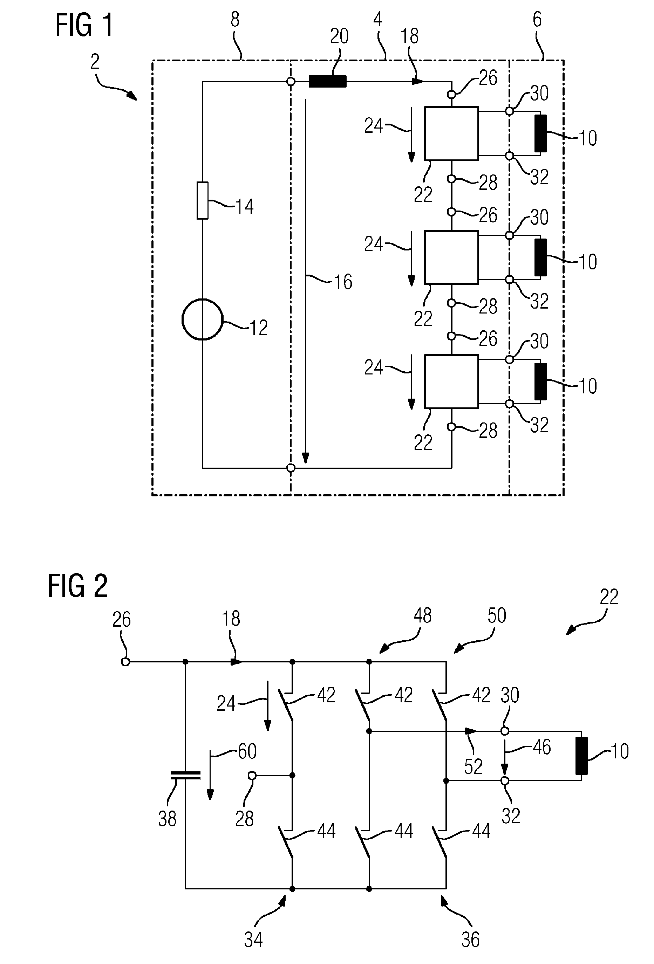

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist drei elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an den modularen Umrichter 4 einen Batteriestrom 18 ab. Die Batteriespannung 16 ist eine Gleichspannung, während der Batteriestrom 18 ein Gleichstrom ist.

Die Stromrichterschaltung 4 weist eingangsseitig eine Induktivität 20 auf, die beispielsweise eine Drossel sein kann. Es ist jedoch auch möglich, dass diese Induktivität 20 allein durch die Verbindungsleitung zur Batterie 8 realisiert wird. An diese Induktivität 20 schließt sich in Reihe eine Reihenschaltung aus drei noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die elektrischen Lasten 10 mit elektrischer Energie in einer noch zu beschreibenden Weise. Für die Anzahl der Submodule 22 und elektrischen Lasten 10 wurde in der vorliegenden Ausführung drei gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die elektrischen Lasten 10 angeschlossen.

Es wird auf FIG 2 Bezug genommen, die beispielhaft den Aufbau eines der Submodule 22 in der Stromrichterschaltung 2 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 34, eine Vollbrücke 36 und einen Zwischenkreiskondensator 38 auf, die alle miteinander parallel verschaltet sind.

Die Eingangshalbbrücke 34 weist in einem ersten Brückenarm einen ersten Schalter 40 sowie in einem zweiten Brückenarm einen zum ersten Schalter 42 in Reihe geschalteten zweiten Schalter 44 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können zum ersten Schalter antiparallel und zum zweiten Schalter parallel Freilaufdioden geschaltet werden.

Die Teilspannung 24 ist an den ersten Schalter 40 angelegt, während der zweite Schalter 42 in Reihe zwischen dem ersten Schalter 40 und der Vollbrücke 36 geschaltet ist. Somit kann der erste Schalter 40 aus Sicht der Vollbrücke 36 den Eingang 26, 28 aus der Batterie 8 kurzschließen, während der zweite Schalter 42 (bei geöffneten ersten Schalter 40) die Vollbrücke 36 in den Strompfad der Batterie 8 legen kann. Werden in jedem Submodul 22 die Schalter 40, 42 in gleicher Weise abwechselnd geöffnet und geschlossen, ist gemeinsam mit der Induktivität 20 ein Hochsetzsteller geschaffen, der die Summe aller in den Submodulen 22 abfallenden Zwischenkreiskondensatorspannungen 60 höher setzt, als die Batteriespannung 16. Weiterhin kann durch die Eingangshalbbrücke 34 die Vollbrücke 36 auch dauerhaft aus der Reihenschaltung der vier Submodule 22 entfernt werden, wenn der erste Schalter 40 dauerhaft geschlossen bleibt.

Der Vollbrücke 36 ist zum Wechselrichten der am Eingang 26, 28 des Submoduls 22 abfallenden Teilspannung 24, in eine Wechselspannung 46 am Ausgang 30, 32 des Submoduls 22 vorgesehen. Dazu weist die Vollbrücke 38 zwei Wechselrichterhalbbrücken 48, 50, die die gleichen Elemente, wie die Eingangshalbbrücke 40 aufweisen. Die Eingangshalbbrücke 34 und die beiden Wechselrichterhalbbrücken 48, 50 der Vollbrücke 36 sind parallel miteinander verschaltet. An einem Brückenzweig der Vollbrücke 36 kann die Wechselspannung 46 abgegriffen werden. Entsprechend wird an die elektrische Last 10 ein Wechselstrom 52 abgegeben. Die Vollbrücke 36 kann als Vierquadrantensteller aufgebaut werden. In diesem Fall sind eventuell notwendige Freilaufdioden im Unterschied zur Eingangshalbbrücke 34 immer antiparallel zu ihren jeweiligen Schaltern 42, 44 zu schalten.

Der Zwischenkreiskondensator 38 ist in der vorliegenden Ausführung dazu vorgesehen einen zu starken gleichspannungsseitigen Spannungsanstieg aufgrund von Überspannungen zu vermeiden. Dazu kann der Zwischenkreiskondensator 38 beispielsweise als Keramikkondensator ausgebildet sein, der von einer Betriebstemperatur des Submoduls 22 weitestgehend unabhängig ist.

Zur Versorgung der elektrischen Last 10 mit Blindleistung kann der Zwischenkreiskondensator 38 auch negative Leistungswellen eines Blindleistungsflusses zur elektrischen Last 10 speichern. Bestimmte elektrische Verbraucher 6, wie beispielsweise ein Asynchronmotor benötigen diesen Blindleistungsfluss für ihren Betrieb. In der Regel wird jedoch der Wirkleistungsfluss zwischen der Batterie 8 und dem elektrischen Verbraucher 6 geregelt. Durch diese Regelung ist die Richtung des Batteriestromes 18 durch die einzelnen Submodule 22 aufgrund der feststehenden Richtung der Teilspannungen 24 nicht ohne weiteres umkehrbar. Aus diesem Grund können negative Leistungswellen des Blindleistungsflusses das Submodul 22 nicht eingangsseitig verlassen und müssen im Submodul 22 zwischengespeichert werden, wofür der Zwischenkreiskondensator 38 vorhanden ist.

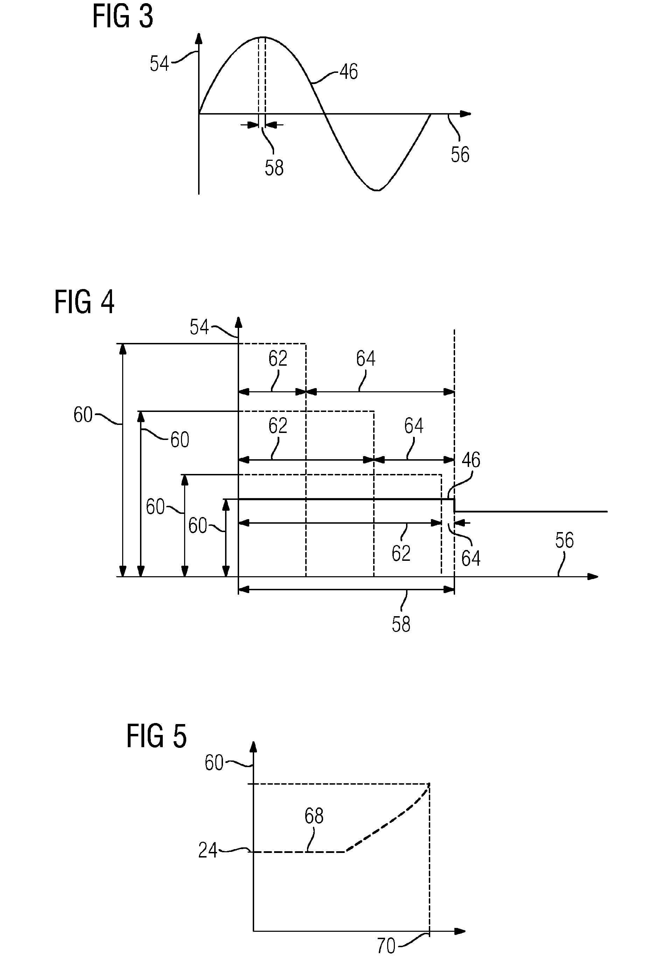

Es wird auf FIG 3 Bezug genommen, die ein Diagramm der Wechselspannung 46 am Ausgang 30, 32 des Submoduls 22 aus FIG 2 zeigt. In FIG 3 werden zu FIG 1 und 2 gleiche Elemente mit gleichen Bezugszeichen versehen und nicht noch einmal beschrieben.

Die Werte 54 der Wechselspannung 46 sind in FIG 3 qualitativ über die Zeit 56 aufgetragen.

In der vorliegenden Ausführung soll angenommen werden, dass die Wechselspannung 46 durch eine Raumzeigermodulation gebildet wird. Dazu wird die Wechselspannung 46 in eine Vielzahl von Modulationsperioden 58 aufgeteilt, von denen in FIG 3 der Übersichtlichkeit halber nur eine Modulationsperiode 58 gezeigt ist, die im Maximum der zu erzeugenden Wechselspannung 46 liegt.

Die Raumzeigermodulation soll nachstehend anhand von FIG 4 näher erläutert werden, die die Wechselspannung 46 der FIG 3 innerhalb der in FIG 3 gezeigten Modulationsperiode 58 zeigt.

Zur Raumzeigermodulation wird eine am Zwischenkreiskondensator 38 abfallende Spannung 60 als Grundspannungszeiger innerhalb dieser Modulationsperiode 58 für eine erste Zeitdauer 62 an den Ausgang 30, 32 des Submoduls 22 über die Vollbrücke 36 angelegt. Nach Ablauf der ersten Zeitdauer 62 wird in einer verbleibenden Zeitdauer 64 innerhalb der Modulationsperiode 58 ein Nullzeiger an den Ausgang 30, 32 des Submoduls 22 angelegt. Im Mittel ergibt sich ein bestimmter Momentanwert 66 der Wechselspannung 46. Dieser Momentanwert 66 kann so eingestellt werden, dass die Wechselspannung 46 einer nicht weiter gezeigten Sollspannung folgt.

Wie aus FIG 4 ersichtlich, ist ein bestimmter Momentanwert 66 mit verschiedenen Spannungswerten der Spannung 60 am Zwischenkreiskondensator 38 erreichbar. Je höher die Spannung 60 ist, desto länger muss der Nullzeiger in der verbleibende Zeitdauer 64 an den Ausgang 30, 32 des Submoduls 22 angelegt werden. Wird die Dauer 62 des Grundspannungszeigers erhöht und die Dauer 64 des Nullzeiger gesenkt, so können die Momentanwerte 66 der an das Submodul 22 angelegten Wechselspannung 46 und damit die an das Submodul 22 abgegebene elektrische Leistung erhöht werden.

Bei der Modulation des Momentanwerts 66 im in FIG 3 gezeigten Maximum der Wechselspannung 46 stellt die verbleibende Zeitdauer 64 daher eine Reserve dar, um die die an das Submodul 22 abgebbare elektrische Leistung erhöht werden kann. Die verbleibende Zeitdauer 64 wird daher nachstehend auch als Aussteuerreserve 64 bezeichnet.

Wie aus FIG 4 ersichtlich steigen die Spannungssprünge beim Modulieren der Wechselspannung 46, je höher die Spannung 60 am Zwischenkreiskondensator 38 und damit die Aussteuerreserve 64 ist. Mit den Spannungssprüngen steigen auch die Schaltverluste.

In der vorliegenden Ausführung wird die Spannung 60 am Zwischenkreiskondensator 60 daher über den Hochsetzsteller am Eingang 26, 28 jedes Submoduls 22 in der vorliegenden Ausführung derart eingestellt, dass einerseits die Spannungssprünge und damit die Schaltverluste gering gehalten werden, andererseits jedoch eine ausreichende Aussteuerreserve 54 zur Modulation der Wechselspannung 46 vorhanden ist.

Es wird auf FIG 5 Bezug genommen, die eine beispielhafte Kennlinie 68 zur Einstellung der Spannung 60 am Zwischenkreiskondensator 38 zeigt.

Die Kennlinie 68 stellt für ein Submodul 22 die Leistung 70 am Ausgang 30, 32 des jeweiligen Submoduls 22 der Spannung 60 am Zwischenkreiskondensator gegenüber. Die Leistung 70 kann beispielsweise durch die Drehzahl des oben genannten Elektromotors bestimmt sein, dessen Motorwicklungen die Lasten 10 sind, die an die Submodule 22 angeschlossen sind.

Die Kennlinie 68 reduziert ausgehend von einem Leistungsmaximum die Spannung 60 am Zwischenkreiskondensator 38 linear bis zu einem Wert, an dem die Spannung 60 am Zwischenkreiskondensator 38 gleich einem Minimalwert ist. Der Minimalwert der Zwischenkreisspannung 60 ist dadurch gegeben, dass die Summe aller Zwischenkreisspannungen 60 mindestens so groß wie die Batteriespannung 16 sein muss. Der Minimalwert kann auch dem Mittelwert der Teilspannung 24 entsprechen, weil die Teilspannung 24 einen getakteten Verlauf abhängig vom Schaltzustand der Eingangshalbbrücke 34 des Submoduls 22 aufweist. Ist die Spannung 60 am Zwischenkreiskondensator 38 kleiner als der Minimalwert, kann der Hochsetzsteller die Zwischenkreiskondensatorspannung 60 nicht weiter verringern, so dass die Zwischenkreiskondensatorspannung 60 in diesem Bereich unabhängig von der abgegebenen elektrischen Leistung ist.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Verfahren zum Steuern einer Stromrichterschaltung (4) umfassend wenigstens zwei Submodule (22) in Reihenschaltung, die über eine Induktivität (20) elektrische Leistung aus einer eine Gleichspannung (16) abgebenden Leistungsquelle (8) bezieht aufweist, wobei jedes Submodul (22) eingangsseitig eine einphasige Halbbrücke (34) und lastseitig eine einphasige Vollbrücke (36) aufweist, wobei die Halbbrücke (34) und die Vollbrücke (36) gleichspannungsseitig sowie parallel hierzu ein Zwischenkreiskondensator (38) geschaltet sind, und wobei in jedem Submodul zur Abgabe einer elektrischen Leistung an einen elektrischen Verbraucher (6) eine am Zwischenkreiskondensator (38) abfallende Zwischenkreiskondensatorspannung (60) basierend auf einer Sollspannung wechselgerichtet wird, **dadurch gekennzeichnet , dass** die Zwischenkreiskondensatorspannung (60) basierend auf der Sollspannung eingestellt wird, wobei die Sollspannung insbesondere einer lastseitigen Ausgangsspannung (46) entspricht.

2. Verfahren nach Anspruch 1, **dadurch gekennzeichnet, dass** die Zwischenkreiskondensatorspannung (60) einem Scheitelwert der Sollspannung folgend eingestellt wird.

3. Verfahren nach Anspruch 2, **dadurch gekennzeichnet, dass** die Zwischenkreiskondensatorspannung (60) dem Scheitelwert der Sollspannung mit einer Aussteuerreserve (64) folgend eingestellt wird.

4. Verfahren nach Anspruch 3, **dadurch gekennzeichnet, dass** die Aussteuerreserve (64) 5%-15%, insbesondere 10% beträgt.

5. Verfahren nach einem der vorstehenden Ansprüche, **dadurch gekennzeichnet, dass** die Zwischenkreiskondensatorspannung (60) basierend auf einer Kennlinie (68) eingestellt wird.

6. Verfahren nach Anspruch 5, **dadurch gekennzeichnet, dass** die Kennlinie (68) in Abhängigkeit der an den elektrischen Verbraucher (6) abzugebenden elektrischen Leistung, insbesondere in Abhängigkeit einer Ausgangsspannung (46) des Submoduls (22), monoton steigend ist.

7. Verfahren nach Anspruch 5 oder 6, **dadurch gekennzeichnet, dass** der elektrische Verbraucher (6) ein Elektromotor und die Kennlinie abhängig von der Drehzahl des Elektromotors ist.

8. Verfahren nach Anspruch 7, **dadurch gekennzeichnet, dass** die Kennlinie (68) unterhalb einer vorbestimmten Grenzdrehzahl eine Konstante ist.

9. Verfahren nach einem der vorstehenden Ansprüche, **dadurch gekennzeichnet, dass** die Induktivität (20) und die Halbbrücke (34) in jedem Submodul (22) einen Hochsetzsteller bilden, wobei in jedem Submodul (22) das Einstellen der Zwischenkreiskondensatorspannung (60) basierend auf der Sollspannung über den Hochsetzsteller erfolgt.

10. Verfahren nach Anspruch 9, **dadurch gekennzeichnet, dass** die Kennlinie (68) konstant bleibt, wenn die Sollspannung kleiner als eine Eingangsspannung (24) des Hochsetzstellers ist.

11. Steuervorrichtung (62) zur Durchführung eines Verfahrens nach einem der vorstehenden Ansprüche.

12. Stromrichterschaltung (4), umfassend wenigstens zwei Submodule (22) in Reihenschaltung, die über eine Induktivität (20) elektrische Leistung aus einer eine Gleichspannung (16) abgebenden Leistungsquelle (8) bezieht,
- wobei jedes Submodul (22) eingangsseitig eine einphasige Halbbrücke (34) und lastseitig eine einphasige Vollbrücke (36) aufweist, und
- wobei die Halbbrücke (34) und die Vollbrücke (36) gleichspannungsseitig sowie parallel hierzu ein Zwischenkreiskondensator (38) geschaltet sind,
**gekennzeichnet durch**
- eine Steuervorrichtung nach Anspruch 7.

13. Elektromotor umfassend wenigstens einen ersten und zweiten Motorstrang zum Antreiben eines Rotors, **gekennzeichnet durch** eine Stromrichterschaltung (4) nach Anspruch 12, wobei das erste Submodul (22) mit dem ersten Motorstrang und das zweite Submodul (22) mit dem zweiten Motorstrang verbunden sind.

14. Elektromotor nach Anspruch 9, wobei alle Motorstränge einen identischen Betriebspunkt aufweisen.

15. Fahrzeug umfassend ein Rad und einen Elektromotor nach Anspruch 13 oder 14 zum Antrieb des Rades.
